# EUROPÄISCHE PATENTANMELDUNG

(11) **EP 4 230 363 A1**
(43) Veröffentlichungstag der Anmeldung: **23.08.2023**
(21) Anmeldenummer: 23156093.9
(22) Anmeldetag: 10.02.2023
(51) Int. Cl.: B25J 15/00, B25J 15/06, B25J 9/00, B25J 9/10

(54) **VERFAHREN ZUM UMSETZEN VON PRODUKTEN SOWIE HIERFÜR GEEIGNETER UMSETZ-ROBOTER**

(30) Priorität: 17.02.2022 DE 102022103779
(71) Anmelder: Gerhard Schubert GmbH, 74564 Crailsheim (DE)
(72) Erfinder: Rothweiler, Adrian, 76135 Karlsruhe (DE); Yildirim, Muhammed Burak, 76137 Karlsruhe (DE); Heckmann, Isabel, 74214 Oberkessach (DE); Lalla, Fabian, 76131 Karlsruhe (DE); Kappus, Jonathan, 76133 Karlsruhe (DE); Hierzegger, Lukas, 76137 Karlsruhe (DE); Ben Salem, Achraf, 91583 Schillingsfürst (DE); Schuster, Manuel, 74575 Schrozberg (DE); Geißler, Andreas, 91555 Feuchtwangen (DE)
(74) Vertreter: Weickmann & Weickmann PartmbB

(57) **Zusammenfassung**

Um das Umsetzen von Produkten (P) bei begrenztem Mehrgewicht und konstruktiven Mehraufwand des Greifkopfes (20) zu beschleunigen, umfasst dieser mehrere, vorzugsweise genau zwei, Greifer/Sauger (22) und es wird nur eine steuerbare Achse/Freiheitsgrad des Roboters (1) dafür verwendet, um die Relativ-Position der zwei Greifer/Sauger (22) zueinander zu verändern.

## Beschreibung

### I. Anwendungsgebiet

Die Erfindung betrifft ein Verfahren zum schnellen Aufnehmen und insbesondere auch Ablegen, also insgesamt Umsetzen, von Produkten sowie einen hierfür geeigneten Umsetz-Roboter, und insbesondere dessen Greifer.

### II. Technischer Hintergrund

In der Industrie werden Roboter benutzt, die als Werkzeug einen oder mehrere Greifer aufweisen, mittels denen Produkte umgesetzt werden.

Zum Einen gibt es von solchen Umsetz-Robotern mehrere grundsätzlich unterschiedliche Bauformen:
Der sogenannte serielle Roboter ist der klassische Scara-Roboter, bei dem der Roboterarm aus mehreren seriell aufeinander folgenden, gelenkig aneinander befestigten, Armteilen, wie etwa - in Anlehnung an den biologischen Arm bezeichnet - Roboterbasis oder Schulter, Oberarm, Unterarm und Roboterhand, besteht, die gelenkig miteinander verbunden sind, wobei die Roboterhand in der Regel das Werkzeug oder die Werkzeughalterung darstellt.

Ein solcher serieller Roboter hat einen relativ großen Arbeitsbereich, kann je nach Auslegung auch hohe Lasten im Vergleich zu seinem Eigengewicht bewegen, ist in seiner Geschwindigkeit jedoch begrenzt durch das Eigengewicht und die hierfür benötigte Beschleunigungs-Leistung.

Roboter mit sogenannter Parallel-Kinematik, häufig in der Bauform als Dreibein-Roboter oder auch so genannte Delta-Roboter, besitzen demgegenüber meist geringere zu bewegende Massen und sind dazu geeignet, relativ kleine Lasten sehr schnell zu bewegen, allerdings in einem zu den Abmessungen eines solchen Roboters relativ kleinen Arbeitsbereich.

Während üblicherweise bei einem Umsetz-Roboter als Greifkopf nur ein einzelner Greifer, z.B. ein Sauger, vorhanden ist, der in aller Regel auch nur ein einziges Produkt - in Ausnahmefällen auch z.B. mehrere übereinander gestapelte Produkte auf einmal - aufnehmen kann, sind für Spezialanwendungen auch Roboter bekannt, bei denen der Greifkopf mehrere Greifer aufweist, von denen jeder ein Produkt aufnehmen kann und die in ihrem Relativabstand zueinander veränderbar sind, was als Spreizung der Greifer bezeichnet wird.

Da dann meist jeder Greifer des Greifkopfes nacheinander je ein Produkt aufnimmt, bevor der Greifkopf zur Ablageseite bewegt wird, soll dadurch die für das Umsetzen eines Produktes benötigte Zeit reduziert werden.

Dies ist allerdings nur dann der Fall, wenn die für das Bewegen des Greifkopfes von der Aufnahmeseite zu Ablageseite benötigte Zeit, die sich bei dieser Vorgehensweise auf mehrere Produkte verteilt, relativ groß ist, also beispielsweise der entsprechende Weg relativ lang ist, in Relation zur Dauer der einzelnen Aufnahmevorgänge auf der Aufnahmeseite.

Wenn dies nicht nur in einer, sondern in zwei Raumrichtungen - vorzugsweise in der Aufsicht auf die Aufnahmefläche betrachtet, auf der die Produkte dargeboten werden - möglich ist, wird von einer so genannten Kreuzspreizung gesprochen. Solche Anwendungsfälle erfüllen jedoch in aller Regel als Voraussetzung die Besonderheit, dass die aufzunehmenden Produkte nicht völlig ungeordnet dargeboten werden, sondern in der Aufsicht betrachtet in zumindest einer Dimension oder gar beiden Dimensionen geordnet dargeboten werden. Somit ist - wiederum vorzugsweise in der Aufsicht betrachtet - das für das Aufnehmen herzustellende Greifer-Muster - also die Relativposition der Greifer zueinander innerhalb des Greifkopfes - passend auf ein Aufnahmemuster, zumindest in einer horizontalen Raumrichtung immer das gleiche, was die Steuerung vereinfacht.

Dabei ist ferner zu unterscheiden, ob die zu handhabenden Produkte in der Aufsicht betrachtet
- entweder rotationssymmetrisch sind und/oder ihre Drehlage um die Hochachse für den Umsetzvorgang nicht relevant ist
- oder die Produkte in der Aufsicht nicht rotationssymmetrisch sind und/oder eine bestimmte Drehlage um die Hochachse beim Aufnehmen und/oder Ablegen erfordern, denn dann ist in der Regel als weitere steuerbare Achse eine gesteuerte Drehbarkeit jedes einzelnen Greifers um seine Hochachse notwendig, was eine verfahrenstechnisch deutlich aufwändigere Situation darstellt.

In diesem Zusammenhang ist aus der DE 10 2019 113 287 A1 ein Verfahren bekannt, wie mittels eines Greif-Kopfes, der mehrere in ihrem gegenseitigen Abstand verstellbare und auf einer Linie angeordnete sowie gegebenenfalls um ihre Hochachse drehbare Greifer, meist Sauger, aufweist ein besonders schnelles ergreifen und Umsetzen von Produkten durchgeführt werden kann.

Allerdings erhöhen die mehreren, ansteuerbaren Greifer das Gewicht des Greifkopfes, welches ja bei jedem Anfahrt-Vorgang beschleunigt werden muss, sodass die für Verfahr-Bewegungen benötigte Zeit bei gleicher Antriebsleistung mit steigendem Gewicht größer wird, da die erzielbare Beschleunigung sinkt.

Ein beschleunigter Umsetzvorgang kann somit nur erreicht werden, wenn die durch das Mehrgewicht wegen der mehreren Greifer am Greifkopf bewirkte Verlängerung der Verfahr-Zeiten durch die erhöhte Anzahl von ergriffenen Produkten pro Umsatzvorgang überkompensiert wird.

Ob dies erreicht wird hängt wesentlich davon ab, ob das Mehrgewicht geringgehalten werden kann.

Ein Greifkopf gemäß der Erfindung benötigt 5 ansteuerbare Achsen, also 5 Freiheitsgrade, und ist insbesondere für die Benutzung an einem Roboter mit Parallel-Kinemathek geeignet und vorgesehen.

### III. Darstellung der Erfindung

### a) Technische Aufgabe

Es ist daher die Aufgabe gemäß der Erfindung, einen Greifkopf zum gleichzeitigen Umsetzen von zwei ungeordnet dargeboten Produkten zur Verfügung zu stellen, mit dem das Umsetzen schneller ist als mit einem Greifkopf mit nur einem einzigen Greifer, wobei das Gewicht des Greifkopfes nur wenig erhöht wird. Die Aufgabe besteht ferner darin, ein Verfahren zum Betrieb für einen solchen Greifkopf zur Verfügung zu erstellen.

### b) Lösung der Aufgabe

Diese Aufgabe wird durch die Merkmale der Ansprüche 1, 11 und 13 gelöst. Vorteilhafte Ausführungsformen ergeben sich aus den Unteransprüchen.

Hinsichtlich des Greifkopfes wird diese Aufgabe dadurch gelöst, dass dessen Greifkopf so ausgebildet ist, dass die Greifer in ihrer Relativ-Position zueinander und/oder in ihrer Relativ-Position zum Greifkopf, insbesondere einem Referenzpunkt des Greifkopfes, gesteuert verstellbar sind.

Da als Greifer meist mittels Unterdruck beaufschlagbare Sauger verwendet werden, werden im Rahmen der vorliegenden Beschreibung die Begriffe Sauger und Greifer synonym verwendet, ohne die Erfindung auf Sauger als Greifer zu beschränken, also ohne andere Arten von Greifern als Sauger auszuschließen.

Vorzugsweise liegen in der Aufsicht betrachtet alle Greifer, insbesondere deren Mitten, bei um die Hochachse drehbaren Greifern ihre Hochachsen, auf einer gemeinsamen Linie, die die Verstell-Richtung definiert, indem die Sauger nur entlang dieser Linie gesteuert verstellbar sind.

Vorzugsweise sind die Sauger hierfür linear verfahrbar und die Linie ist eine Gerade. Vorzugsweise ist mindestens einer der beiden Greifer relativ zum anderen linear entlang der Verstell-Richtung verfahrbar.

Alternativ können die Sauger relativ zum Greifkopf jeweils um eine beabstandet von der Mitte des Saugers liegende Schwenkachse verschwenkbar sein, wobei die Schwenkachse aller Sauger die Gleiche sein kann.

Unter der Mitte eines Saugers wird, in der Aufsicht betrachtet, bei einem runden oder regelmäßig polygonen Greifer oder Sauger deren geometrische Mitte verstanden, bei einem um eine Hochachse drehbaren Sauger die in der Aufsicht betrachtete Position dieser Hochachse, insbesondere auf Höhe der Greifebene, insbesondere der Aufnahmefläche des aufzunehmenden Produktes, ansonsten der Schwerpunkt der Fläche des Saugers.

Vorzugsweise ist der Greifkopf so ausgebildet, dass der Abstand aller Greifer in Verstell-Richtung nur synchron verstellt werden kann und/oder nur so verstellt werden kann, dass je zwei zueinander benachbarte Roboter in ihren Abständen immer nur synchron verstellt werden können, und die Abstände der benachbarten Paare von Robotern immer die gleichen sind.

In einer bevorzugten Ausführungsform umfasst der Greifkopf genau zwei Greifer, insbesondere Sauger, die in der Aufsicht betrachtet in ihrem Abstand zueinander und/oder zu einem Referenzpunkt des Greifkopfes gesteuert verstellbar sind. Dies hält den Steuerungsaufwand für den Greifkopf niedrig.

Die Sauger sind vorzugsweise in ihrer Drehlage relativ zum Greifkopf um Hochachsen gesteuert verdrehbar, insbesondere einzeln und unabhängig voneinander.

Zur Verringerung des Steuerungsaufwandes ist es jedoch auch möglich, den Greifkopf so auszugestalten, dass alle Sauger oder jeweils ein Teil der Sauger eines Greifkopfes nur synchron miteinander um ihre Hochachsen verdrehbar sind.

Dadurch ist es dennoch möglich - ggfs. mit mehr Zeitaufwand für zeitversetztes Aufnehmen und/oder Ablegen - vom Greifkopf herantransportierte Produkte im Ablage-Bereich nicht nur in einem vorgegebenen Ablage-Muster, sondern für jedes Produkt auch mit der an seiner Ablage-Position vorgesehenen Soll-Drehlage abzulegen.

Konkret wird die Aufgabe bei einem gattungsgemäßen Greifkopf - der einen Basis-Körper und zwei in ihrem Sauger-Abstand veränderbare Greifer, meist Sauger, aufweist, die auch um ihre Hochachsen gesteuert verdrehbar sind - gelöst, indem der Greifkopf so ausgebildet ist, dass mit nur einem gesteuerten Antrieb und mindestens einer Kupplung sowohl der Sauger-Abstand als auch die Drehlage jedes Greifers, insbesondere Saugers, um die jeweilige Greifer-Hochachse automatisch einstellbar ist.

Dadurch wird nur eine gesteuerte Achse, also ein gesteuerter Parameter, benötigt, und diese Ansteuerung kann dem Greifkopf, nachdem er an einem Roboter-Arm befestigt ist, über den Roboter-Arm und die Befestigungs-Vorrichtung am Roboter-Arm zugeführt werden.

Insbesondere kann der Greifkopf mit den mehreren Greifern bzw. Saugern gegen einen am Roboter oder Roboter-Arm befestigten einzelnen Sauger ausgetauscht werden.

Dabei weist der Greifkopf ein Abstands-Ritzel auf, welches drehbar, beispielsweise im Basis-Körper, gelagert ist, und welches mit zwei Zahnstangen im Eingriff steht, die meist auf zwei einander gegenüberliegenden Seiten des Abstands-Ritzels angeordnet sind.

An jeder der Zahnstangen ist an einer fixen Axialposition ein Sauger-Grundkörper befestigt, sodass die beiden Sauger-Grundkörper bzgl. der Rotationsachse des Abstands-Ritzels einander gegenüberliegen und gegensynchron in Richtung auf das Abstands-Ritzel zu oder von diesem weg, der Abstands-Richtung, angetrieben werden können, wodurch der Sauger-Abstand verstellt wird. Die Sauger-Grundkörper können zur Stabilisierung zusätzlich an einer, vorzugsweise gemeinsamen, Führung in Abstands-Richtung geführt sein.

Das Abstands-Ritzel wird vorzugsweise von extern des Greifkopfes aus angetrieben, in der Regel von dem Roboter oder Roboter-Arm aus, an dem der Greifkopf befestigt ist.

Um auch die Drehlage um die Hochachse für jeden Sauger separat einstellen zu können in Anpassung an das aufzunehmende Produkt, ist in jedem Sauger-Grundkörper ein Sauger-Rohr um die Hochachse dieses Saugers gelagert, wobei sich am unteren Ende des Sauger-Rohres der eigentliche Sauger befindet.

Konzentrisch zu jedem Sauger-Rohr ist eine Antriebs-Hülse vorhanden, die drehbar um ihre Längsachse, die Hochachse, antreibbar ist mittels einer Umfangs-Verzahnung auf ihrem Außenumfang, vorzugsweise in ihrem oberen Endbereich.

Die Umfangs-Verzahnungen dieser Antriebs-Hülsen aller Sauger-Einheiten stehen mit einer Zahnstange, insbesondere einer beidseits verzahnten Doppel-Zahnstange, in Eingriff, die insbesondere parallel zu den Zahnstangen für die Abstandsverstellung verlaufen, allerdings in der Aufsicht betrachtet zwischen den Sauger-Antriebshülsen und damit auch dem konzentrisch dazu angeordneten Sauger-Grundkörper.

Beim Verstellen des Sauger-Abstandes zwischen den beiden Saugern rollen die Antriebshülsen also an der Doppel-Zahnstange ab und rotieren. Wenn das Sauger-Rohr dabei mit der Antriebs-Hülse drehfest verbunden ist, rotiert damit auch das Sauger-Rohr und ändert seine Drehlage.

Um dies steuern zu können, ist zwischen Antriebs-Hülse und Sauger-Rohr oder zwischen Basis-Körper und Sauger-Rohr eine, insbesondere je eine, schaltbare Kupplung zum drehfesten Verbinden dieser beiden Elemente angeordnet.

Dadurch kann während der Veränderung des Sauger-Abstandes ein Sauger-Rohr so lange gedreht werden, bis es die gewünschte Drehlage um die Hochachse erreicht hat, und dann durch Deaktivieren der drehfesten Verbindung zwischen Sauger-Rohr und Antriebs-Hülse und/oder Arretierung der Drehlage diese Drehlage beibehalten, während bei weiterer Abstandsveränderung die Antriebs-Hülse natürlich weiterhin auf der Doppel-Zahnstange abrollt.

Vorzugsweise umfasst deshalb die Kupplung eine Arretier-Vorrichtung zum Arretieren des Sauger-Rohres in einer aktuellen, der gewünschten, Drehlage. Dies kann kraftschlüssig oder formschlüssig durch Festhalten des Sauger-Rohres in der aktuellen Drehlage erfolgen.

Eine erste, sehr einfache und dennoch formschlüssige Möglichkeit besteht darin, dass, insbesondere konzentrisch zur Hochachse, von dem Sauger-Rohr nach oben ein Arretier-Zapfen absteht, der einen polygonen, vorzugsweise regelmäßig sechseckigen, Querschnitt, insbesondere an seinem oberen freien Ende, aufweist.

Darüber ist eine in der Höhe verlagerbare und mit dem Arretier-Zapfen durch Absenken in Eingriff bringbare Arretier-Hülse angeordnet, die durch Aufstecken auf den Arretier-Zapfen dessen weitere Drehung, insbesondere formschlüssig, verhindert, da sie drehfest beispielsweise am Basis-Körper befestigt ist und nur axial zum Arretier-Zapfen verlagerbar ist.

Diese Arretier-Hülse kann beispielsweise eine an sich bekannte, sogenannte Universal-Nuss sein, bei der der Innen-Sechskant-Raum einer sehr großen Nuss, insbesondere eines Innen-Sechskants, mit einer Vielzahl aneinander anliegender Stifte, insbesondere Sechskant-Stifte, gefüllt ist, die jeweils einen Außenumfang in Form eines regelmäßigen Sechskants aufweisen und alle die identische Größe besitzen.

Die Stifte, insbesondere Sechskant-Stifte, sind einzeln mittels Federkraft vorgespannt in die ausgefahrene Richtung und schließen in dieser ausgefahrenen Richtung mit ihrem vorderen freien Ende etwa mit dem vorderen freien Ende des Innen-Sechskant-Raumes ab.

Wird eine solche Universal-Nuss auf einen polygonalen, beispielsweise Sechskant-Schraubenkopf, aufgesteckt, so werden die im Flächenbereich des Kopfes befindlichen Stifte gegen die Kraft der vorspannenden Feder in die Universal-Nuss hineingeschoben, die um den Sechskant-Schraubenkopf oder hier den Sechskant-Zapfen herum angeordneten Sechskant-Stifte liegen jedoch sowohl am Sechskant-Zapfen als auch gegenseitig formschlüssig aneinander an und verhindern eine Drehung des Sechskant-Zapfens oder eines Sechskant-Schraubenkopfes gegenüber der Universal-Nuss unabhängig von ihrer Größe, auch ihrer konkreten Umfangsgestaltung und auch einer zentrischen oder exzentrischen Lage relativ zur Universal-Nuss.

Vorzugsweise ist das Sauger-Rohr begrenzt kraftschlüssig drehfest mit der antriebs-Hülse wirkverbunden, jedoch wird bei Arretieren der Drehbewegung des Sauger-Rohres dieser Kraftschluss überwunden, sodass das Sauger-Rohr nichtdrehend festgehalten wird und die Antriebs-Hülse weiter aufgrund ihres Abrollens an der Doppel-Zahnstange drehen kann.

Hinsichtlich des Umsetz-Roboters, - der gattungsgemäß einen Roboterarm sowie einen an dessen freien Ende gesteuert drehbar um eine Hochachse befestigten Greifkopf umfasst - wird diese Aufgabe dadurch gelöst, dass der Greifkopf wie zuvor beschrieben ausgebildet ist.

Vorzugsweise ist dabei der Greifkopf, insbesondere dessen Befestigungs-Vorrichtung sowie die damit in Eingriff bringbaren Teile des Roboter-Armes, so ausgebildet, dass durch Befestigung des Greifkopfes am Roboter-Arm alle für den Betrieb des Greifkopfes benötigten Verbindungen, insbesondere Antriebs-Verbindungen, mit dem Roboter-Arm hergestellt sind.

Hinsichtlich des Verfahrens wird diese Aufgabe dadurch gelöst, dass vor dem Aufnahmevorgang, also während der Annäherung des Greifkopfes an die festgelegte, aufzunehmende Aufnahme-Gruppe von Produkten, das Greifer-Muster im Greifkopf zumindest für einen Teil der Greifer auf das Aufnahme-Muster, in denen sich die aufzunehmenden Produkte der Aufnahme-Gruppe zueinander befinden, eingestellt wird.

Dies wird erreicht in dem bei der zuvor beschriebenen konkreten Bauform des Greifkopfes mit nur zwei Greifern bzw. Saugern diese beiden auf den gleichen Abstand gebracht werden wie die aufzunehmenden beiden Produkte.

Die Relativ-Positionen der aufzunehmenden Produkte zueinander in der Aufnahme-Gruppe bilden ein Aufnahme-Muster, die Relativ-Positionen der Greifer zueinander im Greifkopf bilden ein Greifer-Muster.

Insbesondere entspricht die Anzahl der Produkte der Aufnahme-Gruppe der Anzahl der Greifer des Greifkopfes.

Zusätzlich wird - ebenfalls vor dem Aufnehmen der Gruppe von Produkten - der Greifkopf um eine Hochachse so gedreht, dass sich in der Aufsicht betrachtet das Greifer-Muster zumindest teilweise auch in der gleichen Drehlage wie das Aufnahme-Muster befindet, sodass es sich mit diesem deckt, wenn sich der Greifkopf über der Gruppe der aufzunehmenden Produkte befindet, insbesondere das Greifer-Muster sich über dem Aufnahme-Muster befindet.

Wenn dann der Greifkopf auf die Gruppe von Produkten abgesenkt wird, können diejenigen Greifer des Greifkopfes, unter den sich nun jeweils ein Produkt befindet, ein solches Produkt aufnehmen, sei es gleichzeitig oder kurz hintereinander.

Dabei ist die gleichzeitige Aufnahme zu bevorzugen, da sie nicht nur Zeit spart, sondern nur eine Absenkbarkeit des Greifkopfes insgesamt erfordert und nicht eine Absenkbarkeit jedes einzelnen Greifers relativ zum Greifkopf einzeln gesteuert möglich sein muss.

Wenn vorliegend von einem einzelnen Produkt gesprochen wird, welches von je einem Greifer ergriffen wird, so kann dies im Einzelfall auch eine Mehrzahl von Produkt-Teilen sein, die ein solches Produkt umfasst, beispielsweise eine zusammengehörige Gruppe von Produkt-Teilen, die gemeinsam als Produkt ergriffen und gehandhabt wird, beispielsweise ein Stapel von Produkten.

Ebenso kann es sein, dass ein Produkt so groß und/oder so schwer ist, dass es von zwei oder mehr Greifern oder Saugern gleichzeitig gehalten werden muss. In einer solche Gruppe von Greifern oder Saugern befinden sich dann meist die Greifer oder Sauger immer in unveränderter Relativposition zueinander und werden als ein einheitlicher Greifer oder Sauger im Sinne der Erfindung betrachtet.

Sobald jeder Greifer oder Sauger des Greifkopfes ein Produkt aufgenommen hat, wird der Greifkopf nach Hochheben zusammen mit den Produkten von der Aufnahme-Fläche, auf der sich die aufzunehmenden Produkte befanden, also dem Aufnahme-Bereich, wegbewegt, vorzugsweise in Richtung Ablage-Bereich.

Für den beschriebenen Vorgang müssen die Aufnahme-Positionen der einzelnen Produkte der Aufnahme-Gruppe auf der Aufnahme-Fläche bekannt sein, insbesondere die Relativ-Positionen der Produkte der Aufnahme-Gruppe zueinander, was in der Regel mittels eines Scanners erfolgt oder aus anderen Quellen bereits vorgegeben wird.

Der erfindungsgemäß bevorzugte Fall besteht darin, dass der Greifkopf nur zwei Greifer oder Sauger umfasst.

Dann wird - gegenüber einem Greifkopf mit nur einem einzigen Greifer oder Sauger - nur eine weitere steuerbare Achse benötigt, nämlich als steuerbarer Parameter der Abstand des jeweiligen Saugers zu einem Referenzpunkt des Greif-kopfes - meist der Mitte des Greifkopfes zwischen den beiden Saugern und/oder der Hochachse des Greifkopfes, um die dieser gesteuert drehbar ist - wodurch auch der Abstand der beiden Sauger zueinander gesteuert wird. Vorzugsweise werden die beiden Greifer gegensynchron, insbesondere ausschließlich gegensynchron, zu diesem Referenzpunkt bewegt.

Vorzugsweise werden die beiden Sauger, insbesondere in der Aufsicht betrachtet, linear entlang einer Linie verschoben, die vorzugsweise durch den Referenzpunkt und/oder durch die Mitten der beiden Sauger verläuft, oder die beiden Sauger werden um jeweils eine Schwenkachse verschwenkt und verändern dadurch ihren Abstand zueinander, wobei vorzugsweise die beiden Schwenkachsen identisch sind.

### c) Ausführungsbeispiele

Ausführungsformen gemäß der Erfindung sind im Folgenden beispielhaft näher beschrieben. Es zeigen:
- **Figur 1:**: eine Aufsicht auf eine bekannte Roboter-Straße mit mehreren Umsetz-Robotern in Prinzip-Darstellung,
- **Figur 2a, b:**: unterschiedliche Ansichten eines bekannten Roboterarmes eines Roboters aus Figur 1 in Prinzip-Darstellung,
- **Figur 3a** - **f:**: in der Aufsicht betrachtet unterschiedliche Arbeitsstellungen eines Greifkopfes mit zwei Greifern zum Umsetzen von in der Aufsicht rechteckigen Produkten in Prinzip-Darstellung,
- **Figur 4a:**: eine konkrete konstruktive Lösung eines solchen Greifkopfes mit zwei verstellbaren Greifern in der Aufsicht von oben mit einer ersten Bauform einer Blockier-Vorrichtung für einen um die Hochachse drehbaren Sauger,
- **Figur 4b:**: einen Vertikalschnitt entlang der Linie B - B in **Figur 4a****,**
- **Figur 5a:**: einen durch beide Sauger verlaufenden Vertikalschnitt in analoger Darstellung zu **Figur 4b** mit einer zweiten Bauform einer Blockier-Vorrichtung,
- **Figur 5b:**: eine Universal-Nuss, die Teil der Blockier-Vorrichtung der **Figur 5a** ist, in Frontansicht.

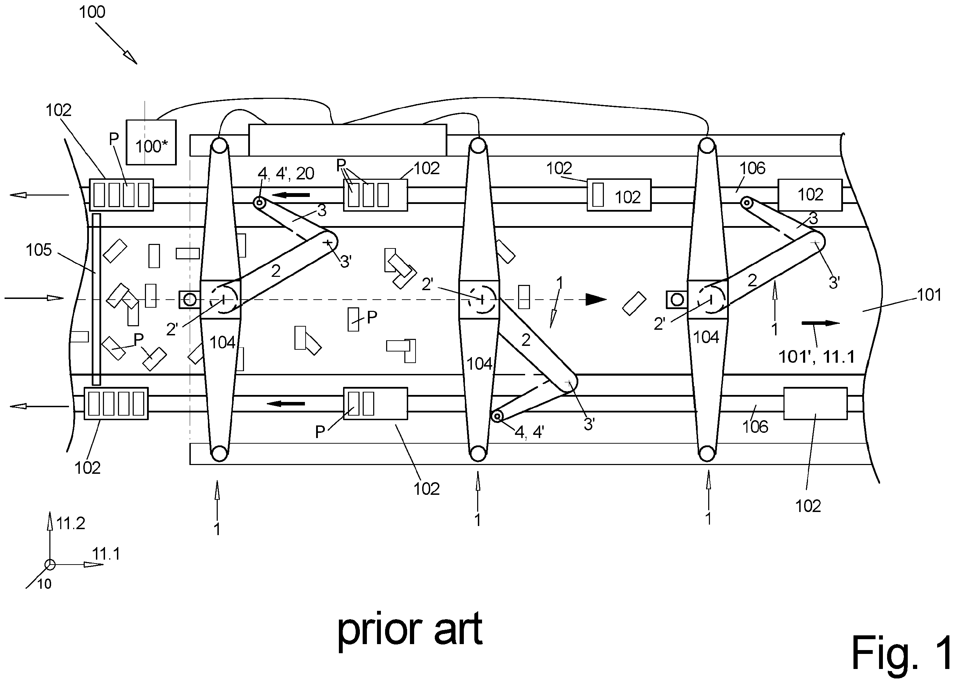

**Figur 1** zeigt eine bekannte Roboterstraße **100** als Umsetz-Vorrichtung, mittels der Produkte P, die ungeordnet auf einer Aufnahmefläche 101 - hier in Form eines laufenden Produkt-Bandes 101 - angeliefert werden und von einem der mehreren in der Durchlaufrichtung 101' des Produkt-Bandes 101 hintereinander angeordneten Robotern 1 ergriffen und auf einer Ablagefläche 103 - in diesem Fall dem Boden von Behältern 102 - abgelegt werden.

Bei den Robotern 1 handelt es sich in diesem Fall um serielle Roboter, sogenannte Scara-Roboter, was jedoch für die Benutzung des erfindungsgemäßen Greifkopfes unerheblich ist, sofern der Roboter eine ausreichende Anzahl von ansteuerbaren Achsen bietet. Es könnte sich somit bei diesen Robotern stattdessen auch um Delta-Robotern mit einer ausreichenden Anzahl von ansteuerbaren Achsen handeln

Zu diesem Zweck wird am Eingang vor dem Umsetz-Bereich, also vor dem ersten in Durchlaufrichtung 101' vorhanden Roboter 1, mittels eines Scanners 105 die Position und gegebenenfalls auch Drehlage der Produkte P auf dem Produktband 101 ermittelt und an die Steuerung 100* der Roboterstraße 100 weitergegeben, die auch mit den Antrieben aller anderen beweglichen Komponenten verbunden ist und beispielsweise die Geschwindigkeit des Produktbandes 101 in Durchlaufrichtung 101' kennt, so dass jederzeit die absoluten Produkt-Positionen der Produkte P auf dem Produktband 101 bekannt sind gegebenenfalls einschließlich ihrer Drehlage.

Die Behälter 102 stehen auf einem von in diesem Fall zwei Behälter-Bändern 106, welche in diesem Fall parallel, aber entgegen der Durchlaufrichtung 101', jeweils seitlich neben dem Produktband 101 laufen.

Von den Robotern 1 sind jeweils die oberhalb des Produktbandes 101 in der horizontalen Querrichtung zur Durchlaufrichtung 101' verlaufenden, meist aufgeständerten, Quertraversen 104 erkennbar, die als Roboter-Basis 104 dienen und an denen jeweils ein - in diesem Fall serieller - Roboterarm befestigt ist.

Dessen Oberarm 2 ist gegenüber der Roboterbasis 104 um eine sich in der Vertikalen 10 erstreckende Oberarm-Achse 2' in der horizontalen Ebene verschwenkbar, und ebenso ein Unterarm 3, der schwenkbar um eine aufrechte, insbesondere vertikale, Unterarm-Achse 3' am freien Ende des Oberarmes 2 befestigt ist.

Am freien Ende des Unterarmes 3 ist eine Hub-Einheit 4 angebracht, die die Vertikalbewegung eines an ihrem unteren Ende befestigten Greifkopfes 20 bewirkt, der mindestens einen Greifer 22, insbesondere Sauger 22, aufweist.

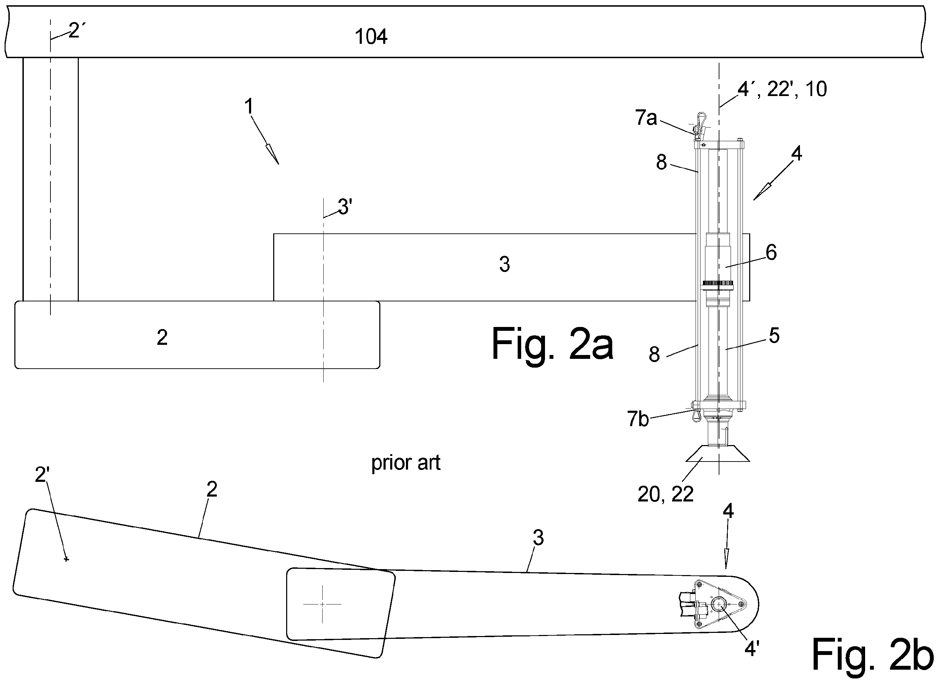

Die Figuren 2a, b zeigen in der Seitenansicht der **Figur 2a** und der Aufsicht der **Figur 2b** an einem nur schematisch dargestellten Roboterarm mit Oberarm 2 und Unterarm 3 beispielhaft eine Bauform der Hubeinheit 4, bei der eine Hubsäule 5, an deren unteren Ende ein Greifkopf 20 mit nur einem Sauger 22 angeordnet ist, der in der Vertikalen 10 relativ zu einer Führungshülse 6 gesteuert verfahrbar ist mittels eines an der Hubsäule 5 angreifenden, ebenfalls vertikal verlaufenden, endlichen Zahnriemens 8.

Der Zahnriemen 8 verläuft ebenfalls in Richtung der Vertikalen 10 und ist mit seinen beiden Befestigung-Enden 7a, b am unteren und oberen Ende der Hubsäule 5 befestigt und steht in Wirkverbindung mit einem gesteuert antreibbaren Antriebsritzel, welches in fester Höhenposition zum Unterarm 3 an der Hub-Einheit 4 befestigt ist.

Die Hubsäule 5 erstreckt sich vertikal durch die Führungshülse 6 hindurch, die in fixer Höhenposition am Unterarm 3 befestigt ist, vorzugsweise zusätzlich gesteuert drehbar ist um eine aufrecht stehende, insbesondere vertikal verlaufende, Hub-Achse 4', so dass die gesamte Hubsäule 5 und damit auch der daran befestigte Greifkopf 20 um diese aufrechte Hub-Achse 4' verdrehbar ist.

Bei anderen Bauformen der Hubeinheit 4 erfolgt der Antrieb des Greifkopfes 20 in der Vertikalen 10 auf andere Art und Weise und/oder nur der Greifkopf 20, beispielsweise der Sauger 22, ist um die aufrechte Hub-Achse 4' drehbar.

Auch andere Bauformen einer Hubeinheit 4 können im Rahmen der vorliegenden Erfindung verwendet werden.

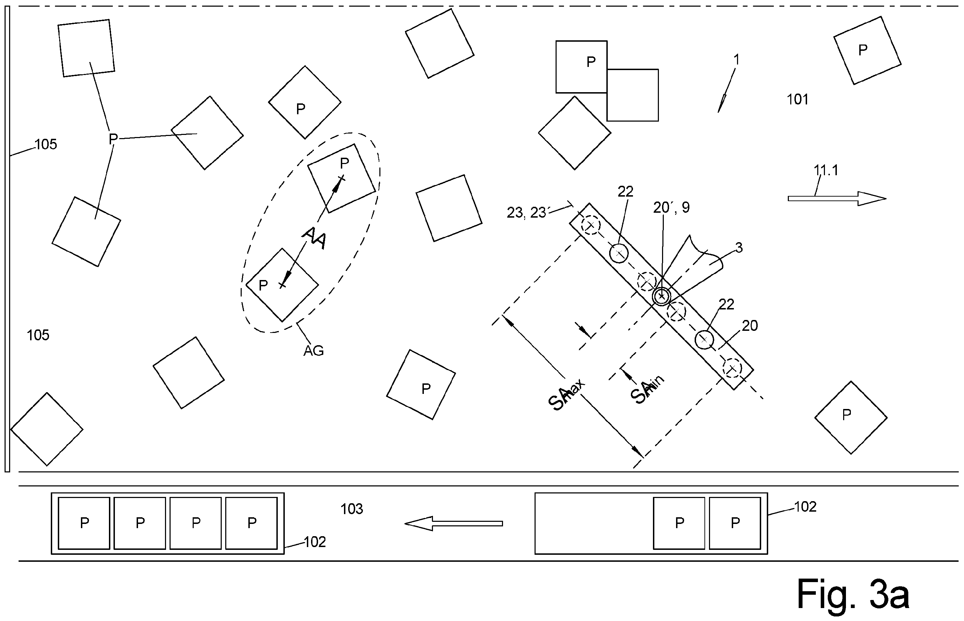

In den nachfolgend beschriebenen **Figuren 3a** **- f** ist am unteren Ende der Hubeinheit 4 jeweils ein Greifkopf 20 mit zwei Greifern 22, insbesondere Saugern 22, montiert. Im Folgenden ist nur noch von Saugern 22 die Rede, ohne die Greifer 22 auf diese einzige Bauform zu beschränken.

Anhand der **Figuren 3a** bis **3e** wird das Umsetzen von in der Aufsicht unrunden, in diesem Fall quadratischen, Produkten P - die auf einer Aufnahmefläche 101 wie etwa einem Produktband 101, ungeordnet herantransportiert werden - in definierte Nest-Positionen in Behältern 102 dargestellt, deren Böden eine Ablagefläche 103 bilden, wobei die Behälter 102 auf einem Behälterband 106 herantransportiert werden, welches auch in diesem Fall parallel, jedoch in Gegenrichtung, verlaufend zu der Aufnahmefläche 101 in Form des Produktbandes 101 angeordnet ist.

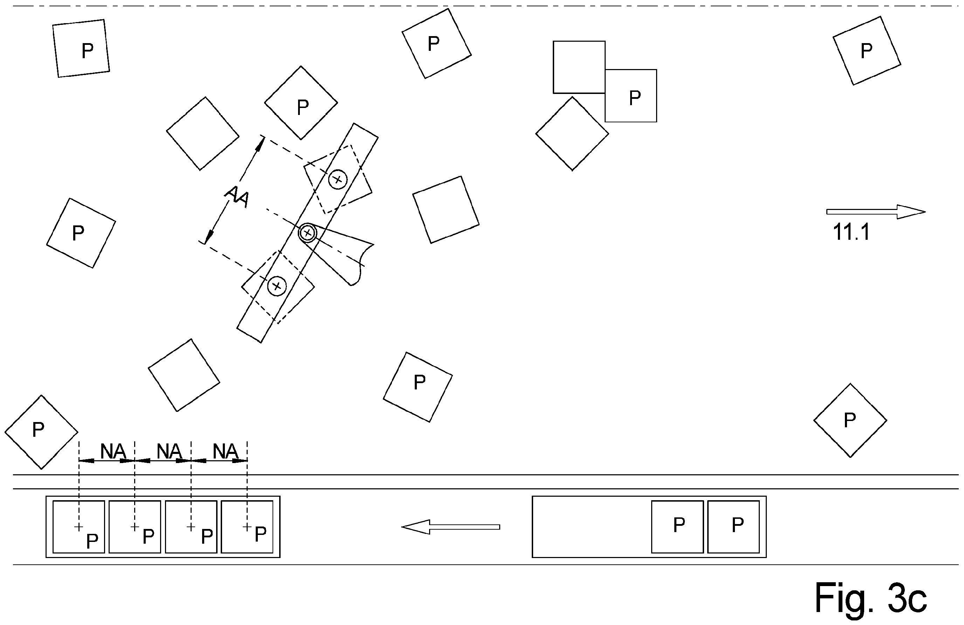

Die Behälter 102 enthalten jeweils vier Nestpositionen in einer Reihe hintereinander, die - wie in **Figur 3c** eingetragen - zwischen je zwei Nest-Positionen, also von Mitte zu Mitte der Nest-Position gemessen, jeweils einen Nest-Abstand NA besitzen.

Das Umsetzen erfolgt mittels eines an einem Roboterarm - von dem in den **Figuren 3a** bis **3e** nur das freie Ende des Unterarmes 3 dargestellt ist - insbesondere an dessen Hubeinheit 4 angeordneten Greifkopfes 20, bei dem es sich um einen sogenannten Doppelpicker handelt, der zwei Greifer 22 in Form von Saugern 22 aufweist, die entlang des Greifkopfes 20 zwischen einem minimalen Sauger-Abstand SAmin und einem maximalen Sauger-Abstand SAmax zueinander verstellbar sind.

Dabei bewegen sich die Mittelpunkte der Sauger 22 - wenn sie punktsymmetrisch zur in der Aufsicht betrachteten Mitte des Greifkopfes, insbesondere des Abstands-Ritzels 24, auf verschiedenen Seiten der Doppel-Zahnstange 27 laufen - auf einer Geraden 23, die somit die Verstell-Richtung 23' der Sauger 22 darstellt und in diesem Fall in der Aufsicht betrachtet sich immer in der gleichen Drehlage zum Basiskörper 20A des Greiferkopfes 20 befindet.

In diesem Fall bewegen sich die Sauger 22 immer gegensynchron zu einem Referenzpunkt 9 am Greifkopf 20, der ebenfalls auf der Geraden 23, der Bewegungslinie, liegt und so angeordnet ist, dass er unabhängig vom Sauger-Abstand SA immer in der Mitte zwischen den beiden Saugern liegt.

Der Greifkopf 20 ist gegenüber dem ihn tragenden Unterarm 3 um eine aufrechte, insbesondere in der Vertikalen 10 verlaufende, Greifkopf-Achse 20' verschwenkbar in der zur Greifkopf-Achse 20' lotrecht stehenden Ebene, insbesondere einer horizontalen Ebene, die aufgespannt wird durch die beiden horizontalen, insbesondere lotrecht zueinander verlaufenden, Quer-Richtungen 11.1, 11.2, wovon eine, beispielsweise die erste Quer-Richtung 11.1, als übereinstimmend mit der Durchlaufrichtung 101' des Produktbandes 101 definiert werden kann.

Die Greifkopf-Achse 20` ist so gewählt, dass sie nicht nur die Bewegungs-Linie 23 schneidet, sondern genau durch den Referenzpunkt 9 verläuft.

Zusätzlich ist der Greifkopf 20 gegenüber dem ihn tragenden Bauteil, in diesem Fall dem Unterarm 3, in der Höhe, insbesondere der Vertikalen 10, verlagerbar, vorzugsweise entlang der anhand der Figuren 2a, b beschriebenen, aufrecht stehenden Hub-Achse 4`, die in diesem Fall mit der Greifkopf-Achse 20' zusammenfällt, um an den Saugern 22 aufgenommene Produkte P hochheben zu können.

Zur Begrenzung der zu steuernden Parameter ist bei dieser Bauform jedoch nur der Greifkopf 20 im Ganzen in der Hub-Richtung 4' verlagerbar, nicht die einzelnen Sauger 22 unabhängig voneinander.

Der Umsetzvorgang läuft dabei wie folgt ab:
Die Steuerung 100* der Roboterstraße 100 wählt nach in der Steuerung hinterlegten Kriterien zunächst eine Aufnahmegruppe AG bestehend aus zwei auf der Aufnahmefläche 101 befindlichen Produkten P aus, die in diesem Fall zwei Produkte umfasst entsprechend der Anzahl von zwei Saugern 22, über die der Greifkopf 20 gemäß **Figur 3a** verfügt, und deren gegenseitiger Abstand zwischen SAmin und SAmax beträgt.

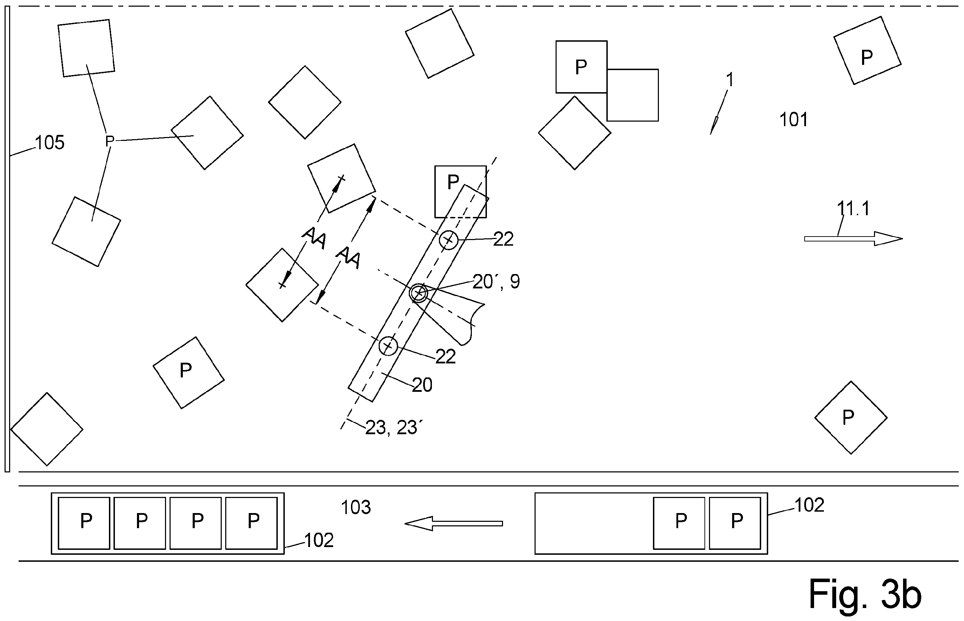

Anschließend werden gemäß **Figur 3b** die beiden Sauger 22 relativ zueinander und/oder zu ihrem Referenzpunkt 9 am Greifkopf 20 so bewegt, dass sie einen Sauger-Abstand SA zueinander einnehmen, der dem Aufnahme-Abstand AA der beiden Produkte P der ausgewählten Aufnahme-Gruppe AG entspricht.

Sowohl der Aufnahme-Abstand AA als auch der Sauger-Abstand SA werden von Mitte zu Mitte der Produkte bzw. der Sauger gemessen.

Ferner wird der Greifkopf 20 um seine aufrechte Greifkopf-Achse 20` gegenüber dem Unterarm 2 so gedreht, dass die Verstell-Richtung 23' der beiden Sauger 22 parallel zur Verbindungslinie zwischen den Mitten der beiden aufzunehmenden Produkte P der Aufnahme-Gruppe AG verläuft.

Des Weiteren wird der Greifkopf 20 mit den Saugern 22 gemäß **Figur 3c** genau oberhalb der Aufnahme-Gruppe AG, also den beiden ausgewählten, aufzunehmenden Produkten P, positioniert, sodass nach Absenken des Greifkopfes 20 und Aktivieren, also mit Saugluft beaufschlagen, der beiden Sauger 22 jeder davon je eines der beiden aufzunehmenden Produkte P ergreift, also ansaugt, wobei die Drehlage jedes Saugers 22 um seine aufrechte Sauger-Achse 22' bekannt ist, indem sie in der Regel ständig detektiert wird.

Vorzugsweise unmittelbar danach wird der Greifkopf 20 entlang der Hub-Achse 4`, die hier gleichzeitig die Greifkopf-Achse 20' ist, hochgehoben, also relativ zum Unterarm 3 in der Höhe verstellt und damit die an den Saugern 22 befindlichen Produkte P von der Aufnahmefläche 101 abgehoben, sodass sie sich zumindest in einer solchen Höhe befinden, dass sie über die noch auf der Aufnahmefläche 101 befindlichen Produkte P hinwegbewegt werden können und auch über den Rand der Behälter 102, in die sie abgelegt werden sollen, hinwegbewegt werden können.

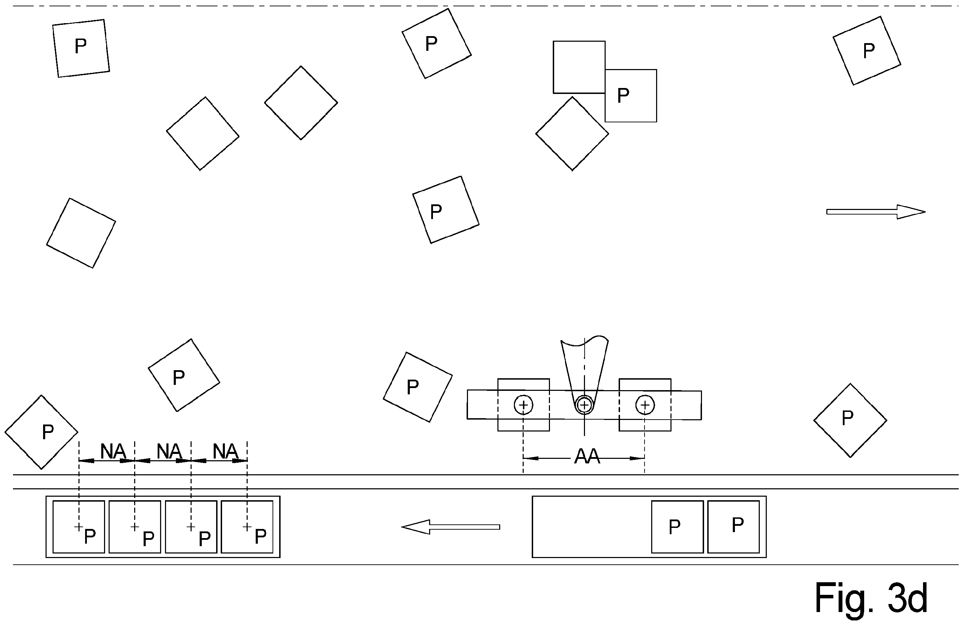

Denn gemäß **Figur 3d** wird der Greifkopf 20 mittels des Roboterarmes in Richtung des Behälters 102 bewegt, in die die beiden vom Greifkopf 20 gehaltenen Produkte P abgelegt werden sollen.

Das Füllen der Behälter 102, die jeweils vier Ablage-Positionen, also Nester, besitzen, erfolgt nacheinander durch Füllen mit zwei Nest-Gruppen NG, die jeweils zwei Produkte P entsprechend der Anzahl von Saugern des Greifkopfes 22 umfassen, in diesem Fall einer Aufnahme-Gruppe AG.

Eine erste Nest-Gruppe NG befindet sich bereits in dem zur Ablage vorgesehenen Behälter 102.

Beim Annähern des Greifkopfes 20 an diesen Behälter 102 werden die Sauger 22 auf einen Sauger-Abstand SA entsprechend dem Nest-Abstand NA der zu füllenden Nester in den Behältern 102 gebracht und der Greifkopf 20 um seine Greifkopf-Achse 20' so gedreht, dass die Verstell-Richtung 23' seiner Sauger 22 parallel verläuft zu der Linie, auf der sich die Nest-Positionen der abzulegenden Nest-Gruppe, hier des gesamten Behälters 102, befinden, da auch dessen Nest-Positionen alle auf einer Linie liegen.

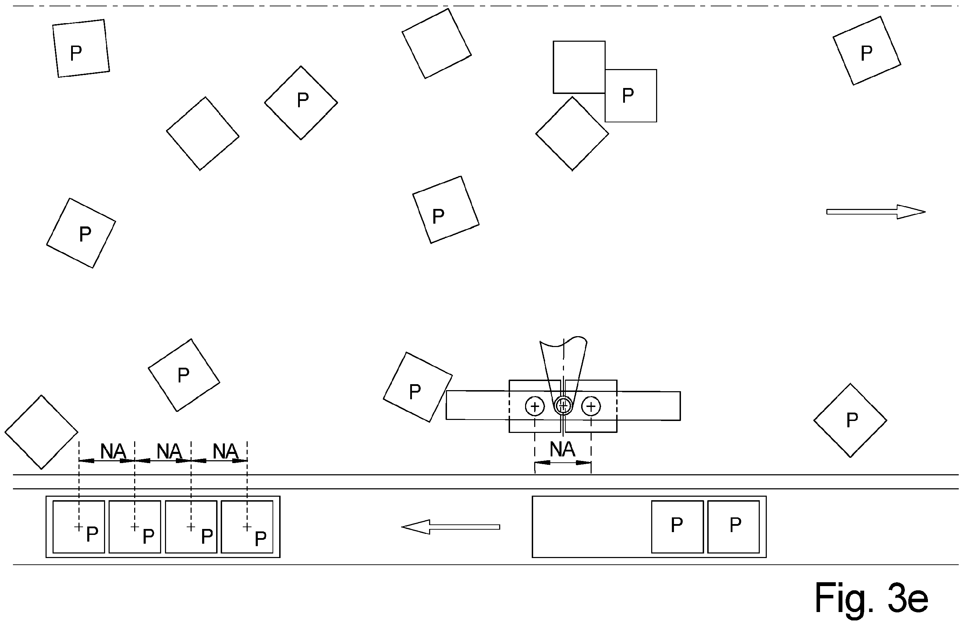

Dann wird gemäß **Figur 3e** der Greifkopf 20 so über dem Behälter 102 positioniert, dass sich die vom Greifkopf 20 gehaltenen beiden Produkte P über den beiden noch freien Nest-Positionen des Behälters 102 befinden, und durch Absenken und anschließendes Deaktivieren der Sauger 22 die daran hängenden beiden Produkte P als zweite Nest-Gruppe NG in dem Behälter 102 abgelegt werden, der dadurch vollständig gefüllt ist.

Anschließend kann der Greifkopf 20 mit den nun unbeladenen Greifern 22 wieder angehoben werden und ihm von der Steuerung 100* damit der nächste Umsetzauftrag zugewiesen werden.

Wie die **Figuren 3a** bis **f** erkennen lassen, sollen die Produkte P in den Behältern 102 abgelegt werden mit parallel zueinander verlaufenden Außenkanten ihrer - in der Aufsicht betrachtet - quadratischen Form.

Deshalb müssen die gemäß **Figur 3c** bereits an den Saugern 22 gehaltenen Produkte P, die sich jedoch noch in unterschiedlichen Drehlagen relativ zueinander befinden - also noch nicht mit ihren gegeneinander weisenden Außenkanten parallel zueinander - zunächst gemäß **Figur 3d** auf eine solche Drehlage gebracht werden - weshalb die Sauger um ihre Sauger-Achsen 22' separat und unabhängig voneinander gesteuert verdrehbar sind - in die gewünschte Drehlage zueinander gebracht werden.

Dies kann gleichzeitig mit der Annäherung des Greifkopfes 20 an den Behälter 102 und/oder der Einstellung des Sauger-Abstandes SA auf den Nest-Abstand NA erfolgen.

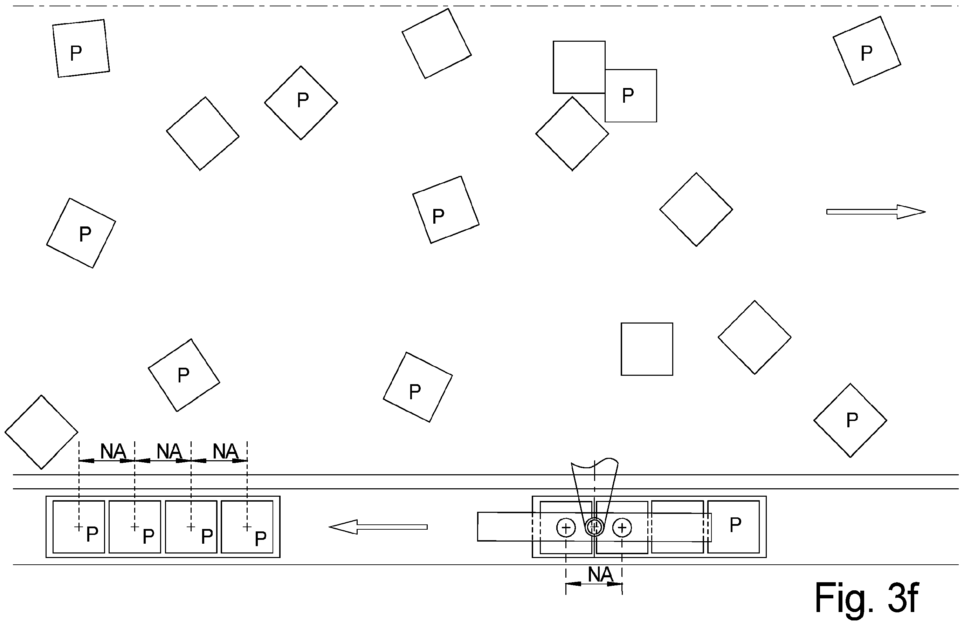

Anschließend erfolgt das Ablegen im Behälter 102 gemäß der Figuren 3e, f wie oben beschrieben.

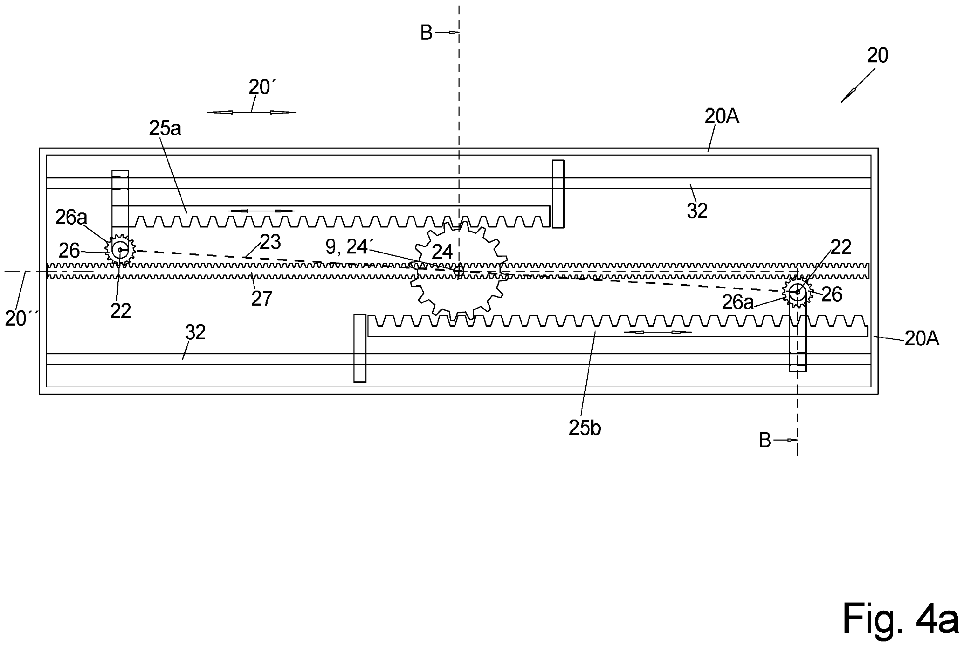

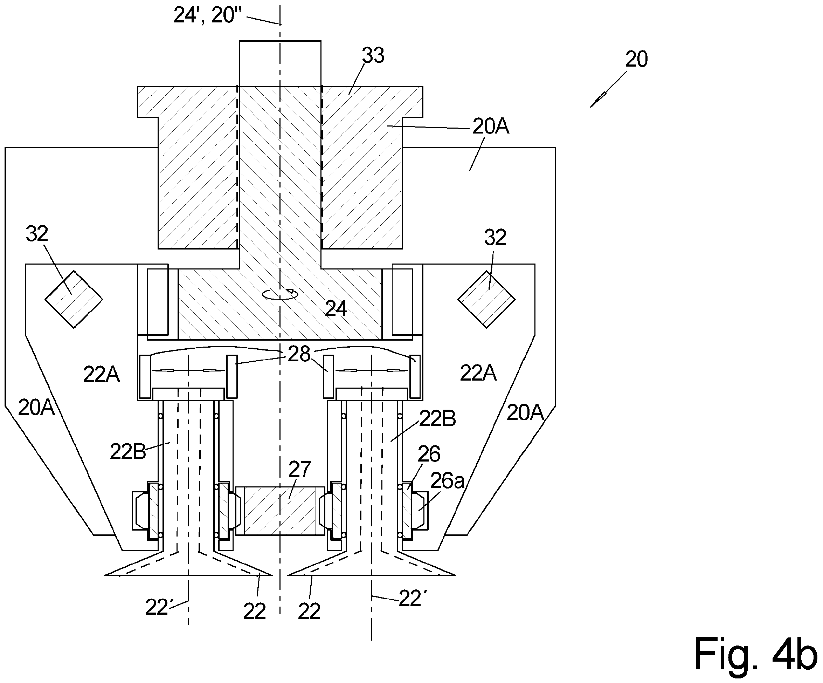

Die Figuren 4a, b zeigen eine erste mögliche konstruktive Lösung eines für das vorstehend beschriebene Vorgehen geeigneten Greifkopfes 20:
Ein Basiskörper 20A des Greifkopfes 20 besteht im Wesentlichen aus in der größten Erstreckungsrichtung des Greifkopfes 20, der Greifkopf-Achse 20`, verlaufenden Streben, die stirnseitig mit je einer Stirnplatte oder einem Stirnrahmen verbunden sind.

Der Basiskörper 20A ist spiegelbildlich zu seiner vertikalen Längs-Mittelebene 20" ausgebildet.

Im Zentrum, also in der Aufsicht betrachtet auf halber Länge des Basiskörpers 20A entlang der Längs-Mittelebene 20", weist der Basiskörper 20A eine Befestigungsvorrichtung 33 an seiner Oberseite auf zum Befestigen an dem freien Ende eines Roboter-Armes 105, beispielsweise mit einem Bajonettverschluss.

An dieser Stelle, also im Zentrum, ist im Basiskörper 20A ein sogenanntes Abstands-Ritzel 24 drehbar um die Vertikale, die Ritzel-Achse 24`, zur Aufsichts-ebene der **Figur 4a** mit einem vom Abstands-Ritzel 24 nach oben aufragenden Lagerzapfen gelagert, sodass sich das Abstands-Ritzel 24 unterhalb der - in **Figur 4a** aus Übersichtlichkeitsgründen nicht dargestellten - Befestigungsvorrichtung 33 befindet.

In der Aufsicht betrachtet befindet sich bezüglich der Längs-Mittelebene 20" gegenüberliegend je eine in Richtung der Greifkopf-Achse 20' verlaufende Zahnstange 25a, b, die zusätzlich Punkt-symmetrisch zur Ritzel-Achse 24' angeordnet sind, und die beide mit dem Abstands-Ritzel 24 kämmen.

Jede der Zahnstangen 25a, b ist an einer ebenfalls in Richtung der Greifkopf-Achse 20' verlaufende Führungsstange 32 geführt, wobei die Führungsstange 32 vorzugsweise einen unrunden Querschnitt besitzt, um ein Verdrehen der Lage der Zahnstange 25a, b gegenüber der Längsachse der Führungsstange 32 zu verhindern und die Zahnstange 25a, b jeweils im Eingriff an dem Abstands-Ritzel 24 zu halten.

In den voneinander abgewandten Endbereichen der beiden Zahnstange 25a, b ist jeweils ein Greifer, insbesondere ein Sauger 22, angeordnet, indem - siehe **Figur 4b** - in diesem an der Führungsstange 32 geführten Sauger-Grundkörper 22A ein Sauger-Rohr 22B drehbar um eine vertikal zur Aufsichts-Ebene der **Figur 4a** stehende Greifer-Achse 22' gelagert ist, von der Höhenlage her in der Regel unterhalb der Höhe des Abstands-Ritzels 24 angeordnet.

Durch gesteuerte Drehung des Abstands-Ritzels 24 lassen sich also die beiden Sauger-Rohre 22B und damit die an deren unteren Enden befestigten Sauger 22 synchron in Richtung der Greifkopf-Achse 20' aufeinander zu und voneinander weg bewegen, und damit analog auf die Ritzel-Achse 24' - die in der Regel auch als Referenzpunkt 9 für die Lagebestimmung des Greifkopfes 20 im Raum dient - zu und von dieser weg bewegt werden.

Die Bewegungslinie 23, welche die in der Aufsicht betrachteten Mitten der Sauger 22 verbindet, verdreht sich dabei leicht um die Ritzel-Achse 24`, d. h. der spitze Winkel gegenüber der Längsmittelebene 20" wird bei einem Aufeinander zubewegen geringfügig größer.

Jedes der Sauger-Rohre 22B ist konzentrisch von einer Antriebs-Hülse 26 umgeben und mit dieser begrenzt kraftschlüssig, beispielsweise mittels ein oder zwei dazwischen angeordneten O-Ringen oder einer Gleit-Zwischenhülse, im Fall des Kraftschlusses drehfest verbunden.

Die Antriebs-Hülse 26 trägt eine Verzahnung 26a auf ihrem Außenumfang, und diese Außenverzahnungen 26a der beiden Antriebs-Hülsen 26 stehen in kämmendem Eingriff mit einer in der Aufsicht betrachtet auf der Längs-Mittelebene 20" fix im Basiskörper 20A, insbesondere unterhalb des Abstands-Ritzels 24 verlaufenden, Doppel-Zahnstange 27, die auf jeder der beiden einander gegenüberliegenden Seiten, die je einer der Außenverzahnungen 26a zugewandt ist, die gleiche Verzahnung trägt, und auch die Außenverzahnungen 26a sind bei beiden Antriebs-Hülsen 26 vorzugsweise identisch.

Es könnte sich jedoch auch um eine einfache Zahnstange handeln, und die beiden Außenverzahnungen 26a könnten auf der gleichen Verzahnung, also Seite, dieser Zahnstange abrollen.

Dabei könnte sich die Zahnstange mit ihrer Verzahnung auch abseits der Längsmittelebene 20" des Greifkopfes 20 befinden, und die Sauger 22, insbesondere Sauger-Rohre 22B, mit ihren Mitten immer auf der Längs-Mittelebene 20" befinden.

Dies bewirkt, dass bei Drehung des Abstands-Ritzels 24 und Relativbewegung der beiden Sauger 22 zueinander zusätzlich das Sauger-Rohr 22B mit dem daran befestigten Sauger 22 um seine aufrechte Achse rotiert wegen des Abrollens der Antriebs-Hülse 26 entlang der Doppel-Zahnstange 27.

Dies wird benutzt, um den Sauger 22 - insbesondere mit einem daran gehaltenen, in der Aufsicht betrachtet unrunden Produkt P - in eine gewünschte Drehlage um die aufrechte Greifer-Achse 22' zu bringen.

Um während des Abrollens an der Doppel-Zahnstange 27 bei Erreichen dieser gewünschten Drehlage eine weitere Drehung des Sauger-Rohres 22B um die Greifer-Achse 22' zu unterbinden trotz weiterem Abrollen der Antriebs-Hülse 26 entlang der Doppel-Zahnstange 27, ist eine Kupplung 28 vorhanden, die das Sauger-Rohr 22B in der gewünschten Drehlage festhält, insbesondere klemmt, und dadurch den Kraftschluss gegenüber der weiterdrehenden Antriebs-Hülse 26 aufhebt.

Die Kupplung ist ebenfalls am Sauger-Grundkörper 22A befestigt, vorzugsweise am oberen Ende des Sauger-Rohres 22B angeordnet, welches aus dem Sauger-Grundkörper 22A nach oben vorstehen kann.

Im Fall der **Figur 4b** handelt es sich bei der Kupplung 28 um zwei einander bezüglich der Greifer-Achse 22' gegenüberliegend angeordnete Klemmbacken, die gesteuert aufeinander zu und voneinander weg bewegt werden können, und im gegeneinander gepressten Zustand einen Abschnitt, hier den oberen Endflansch, des Sauger-Rohres 22B zwischen sich festklemmen.

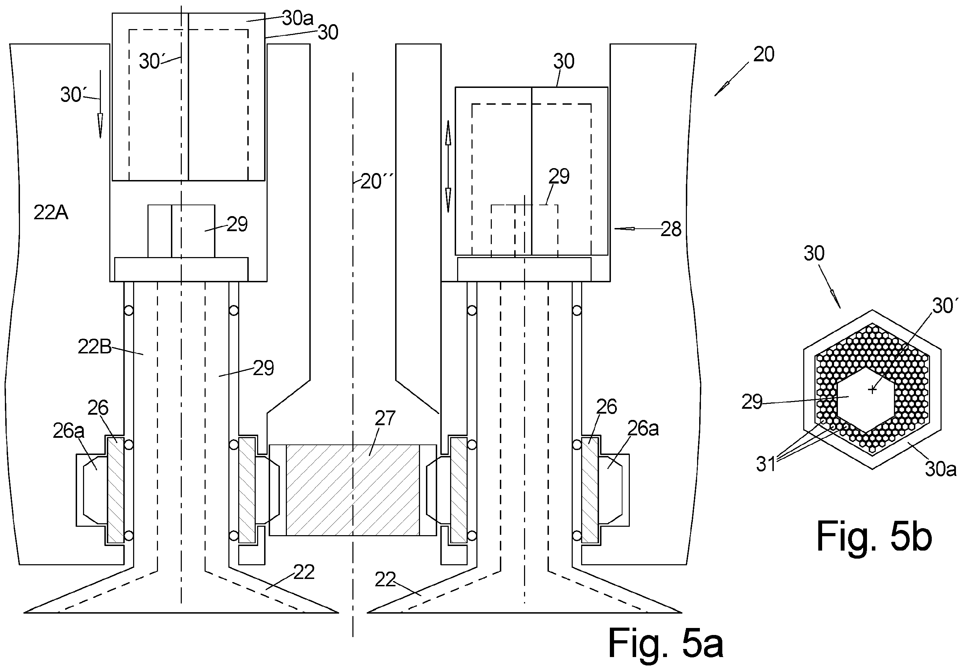

**Figur 5a** zeigt in einer ähnlichen Darstellung wie **Figur 4b** und hier etwas anders gestaltetem Basiskörper 20A als Blockier-Vorrichtung statt dieser kraftschlüssigen Kupplung 28 eine formschlüssige Kupplung 28.

Dabei steht vom oberen Ende des Sauger-Rohres 22B ein Arretier-Zapfen 29 nach oben vor, der in der Aufsicht betrachtet einen unrunden, beispielsweise sechseckigen, Querschnitt besitzt.

Im Sauger-Grundkörper 22A ist darüber eine Arretier-Hülse 30 in der Vertikalen zur Aufsichts-Ebene der **Figur 4a** gesteuert verschiebbar - der Antrieb hierfür ist aus Übersichtlichkeitsgründen nicht dargestellt -, aber drehfest um die Vertikale angeordnet, die durch diese Vertikalbewegung in Eingriff (dargestellt am rechten Sauger 22) oder außer Eingriff (dargestellt am linken Sauger 22) mit dem Arretier-Zapfen 29 gebracht werden kann.

In der aktivierten Stellung, der Eingriffs-Stellung, wird der Arretier-Zapfen 29 und damit das drehfest damit verbundene Sauger-Rohr 22B arretiert, also an seiner weiteren Drehung um die Vertikale gehindert, da die Arretier-Hülse 30 im Sauger-Grundkörper 20A nicht verdreht werden kann um ihre Hochachse.

Zu diesem Zweck besitzt die Arretier-Hülse 30 zumindest in einem bestimmten Höhenbereich vorzugsweise einen unrunden, beispielsweise ebenfalls sechseckigen, Außenumfang.

Eine geeignete Bauform einer solchen Arretier-Hülse 30 ist eine sogenannte Universal-Nuss 30, wie sie in **Figur 5b** in der Frontansicht, also in **Figur 5a** von unten her betrachtet, dargestellt ist:
Eine solche Universal-Nuss 30 besitzt ein Topf-förmiges Gehäuse 30a, welches in diesem Fall gemäß **Figur 5a** mit dem Boden nach oben und der Öffnung nach unten im Sauger-Grundkörper 22A eingebaut ist.

Der Innenraum des Topf-förmigen Gehäuses, der beispielsweise einen sechseckigen Querschnitt aufweisen kann, ist mit einer Vielzahl von in der axialen Richtung 30' dieser Hülse 30 verlaufenden Stiften 31 angefüllt, die sich gegenseitig und gegenüber dem Innen-Umfang der Hülse 30 abstützen, vor allem aber jeder einzelne in axialer Richtung 30' mittels einer Druckfeder gegenüber dem Boden des Topf-förmigen Gehäuses 30a abgestützt sind, wobei diese - nicht dargestellten - Druckfedern die Stifte 31 in die ausgefahrene Stellung vorspannen, in der sie alle etwa auf gleichem Niveau mit ihrem vorderen freien Ende enden, etwa in axialer Richtung im Bereich der Öffnung des Topf-förmigen Gehäuses 30a der Hülse 30 oder geringfügig hiervon zurückversetzt.

Ein besonders guter Formschluss kann beispielsweise erzielt werden, wenn der Querschnitt des Innenraumes des Topf-förmigen Gehäuses 30a der Nuss 30 ein regelmäßiges Sechseck bildet, und ebenso der Querschnitt der einzelnen Stifte 31, die somit Sechskant-Stifte sind.

Wird eine solche Universal-Nuss 30 gemäß **Figur 5a** rechte Seite - zeitlich gesteuert - auf einen unrunden Arretier-Zapfen 29 aufgedrückt, dessen Querschnitt kleiner ist als der Querschnitt des Innenraumes der Universal-Nuss 30, so schiebt dieser die in seinem Querschnittsbereich liegenden Stifte 31 in Richtung Boden, und wird von den übrigen Stiften 31 an seinem Umfang eng anliegend umgebenen, sodass sich der Arretier-Zapfen 29 nicht mehr gegenüber dem Topf-förmigen Gehäuse 30a der Universalnuss 30 verdrehen kann.

### BEZUGSZEICHENLISTE

- 1: Roboter
- 2: Oberarm
- 2': Oberarm-Achse
- 3: Unterarm
- 3': Unterarm-Achse
- 4: Hub-Einheit
- 4`: Hub-Achse
- 5: Hubsäule
- 6: Führungshülse
- 7a, b: Befestigungs-Ende
- 8: Zahnriemen
- 9: Referenzpunkt
- 10: Vertikale
- 11.1: 1. Querrichtung, Laufrichtung Aufnahmefläche
- 11.2: 2. Querrichtung

- 20: Greifkopf
- 20A: Basiskörper
- 20': Greifkopf-Achse
- 20'': Längs-Mittelebene
- 21: Werkzeug-Aufnahme
- 22: Sauger, Greifer
- 22A: Sauger-Grundkörper
- 22B: Sauger-Rohr
- 22': Greifer-Achse
- 23: Bewegungs-Linie, Gerade
- 23': Verstell-Richtung
- 24: Abstands-Ritzel
- 24': Ritzel-Achse
- 25a, b: Zahnstange
- 26: Antriebs-Hülse
- 26a: Umfang-Verzahnung
- 27: Doppelzahnstange
- 28: Kupplung
- 29: Arretier-Zapfen
- 30: Arretier-Hülse
- 30a: Gehäuse
- 30': axiale Richtung
- 31: Stift, Sechskant-Stift
- 32: Führung, Führungsstange
- 33: Befestigung-Vorrichtung

- 100: Umsetzvorrichtung, Roboterstraße
- 100*: Steuerung
- 101: Aufnahmefläche, Produktband
- 102: Behälter
- 103: Ablagefläche
- 104: Quertraverse, Roboterbasis
- 105: Scanner
- 106: Behälterband

- AA: Aufnahme-Abstand
- AG: Aufnahme-Gruppe
- SA: Sauger-Abstand
- SAmax: maximaler Sauger-Abstand
- SAmin: minimaler Sauger-Abstand
- NA: Nest-Abstand
- NG: Nest-Gruppe
- P: Produkt

## Patentansprüche

1. **Greifkopf** (20) zum Befestigen an einem Umsetz-Roboter (1) und zum Aufnehmen und Halten von, insbesondere mindestens, zwei Produkten (P), mit
- einem Basiskörper (20A),
- mindestens zwei Greifern (22), insbesondere Saugern (22), die
- in ihrem Sauger-Abstand (SA) zueinander und/oder zum Grundkörper (20A) gesteuert verstellbar sind,
- um ihre Hochachsen, die Sauger- Hochachsen (22'), gesteuert verdrehbar am Basiskörper (20A) angeordnet sind,
- einer Befestigungsvorrichtung (20B) zum Befestigen des Greifkopfes (20) an einem tragenden Bauteil, insbesondere einem Umsetz-Roboter (1),
**dadurch gekennzeichnet, dass**
der Greifkopf (20) so ausgebildet ist, dass mit nur einer gesteuerten Kupplung (28) pro Greifer (22) und nur einem gesteuerten Antrieb
- sowohl der Sauger-Abstand (SA)
- als auch die Drehlage jedes Greifers (22) um die jeweilige Sauger-Hochachse (22`)
automatisch einstellbar sind.

2. Greifkopf nach Anspruch 1,
**dadurch gekennzeichnet, dass**
wenigstens einer der beiden Sauger (22)
- entweder entlang des Basiskörpers (20A) linear relativ zum anderen Sauger (22) verfahrbar ist,
- oder um eine quer zur Abstands-Strecke zwischen den beiden Saugern (22) verlaufende, aufrechte Schwenkachse verschwenkbar ist.

3. Greifkopf nach einem der vorhergehenden Ansprüche,
**dadurch gekennzeichnet, dass**
- alle Sauger (22) in der Aufsicht betrachtet mit ihren Mitten, insbesondere ihren Drehachsen, auf einer Bewegungs-Linie (23) liegen und nur in der durch diese Linie definierten Verstell-Richtung (23') verstellbar sind,
- insbesondere der Greifkopf (20) so ausgebildet ist, dass der Abstand aller Sauger (22) in Verstell-Richtung (23') nur synchron verstellt werden kann, und/oder
- insbesondere der Roboter (1) so ausgebildet ist, dass die Sauger-Abstände (SA) benachbarter Sauger (22) des Greifkopfes (20) zueinander immer alle gleich groß sind.

4. Greifkopf nach einem der vorhergehenden Ansprüche,
**dadurch gekennzeichnet, dass**
- die Bewegungs-Linie (23) und damit die Verstell-Richtung (23') in der Aufsicht betrachtet drehbar zum Basiskörper (20A) ist
und/oder
- die, insbesondere alle, Sauger (22) entweder einzeln und unabhängig voneinander gesteuert verdrehbar um ihre Sauger-Hochachse (22`) sind.
(Nur zwei Sauger:)

5. Greifkopf nach einem der vorhergehenden Ansprüche,
**dadurch gekennzeichnet, dass**
- der Greifkopf (20) zwei, insbesondere nur zwei, Sauger (22) umfasst, die in der Aufsicht betrachtet in ihrem Sauger-Abstand (SA) zueinander und/oder in ihrem Abstand zu einem Referenzpunkt (9) das Greifkopfes (20), insbesondere der in der Aufsicht betrachteten Mitte der Befestigungs-Vorrichtung (20B), gesteuert verstellbar sind.

6. Greifkopf nach einem der vorhergehenden Ansprüche,
**dadurch gekennzeichnet, dass**
- ein gegenüber dem Grundkörper (20A) um eine aufrecht stehende Rotationsachse (24`), insbesondere die Vertikale, drehbares, gesteuert antreibbares Abstands-Ritzel (24) zwischen zwei Zahnstangen (25a, 25b) angeordnet ist, mit denen es kämmt,
- an denen jeweils ein Sauger-Grundkörper (22A), insbesondere bezüglich der Rotationsachse (24`) des Abstands-Ritzels (24) einander gegenüberliegend, ortsfest angeordnet ist.

7. Greifkopf nach einem der vorhergehenden Ansprüche,
**dadurch gekennzeichnet, dass**
- in jedem Sauger-Grundkörper (22A) ein Sauger-Rohr (22B), an dessen unteren Ende sich der Sauger (22) befindet, drehbar um eine Hochachse (22`) gelagert ist,
- konzentrisch zu jedem Sauger-Rohr (22B), eine drehbare Antriebs-Hülse (26) mit einer Umfang-Verzahnung (26 a) auf dem Außenumfang angeordnet ist,
- die Umfangs-Verzahnungen (26 a) mit einer beidseits verzahnten Doppel-Zahnstange (27) in Eingriff stehen, die parallel zu den Zahnstangen zwischen den Sauger-Grundkörpern (22A) verlaufen,
- zwischen Antriebs-Hülse (26) und Sauger-Rohr (22B), oder zwischen Basiskörper und Sauger-Rohr (22B), eine, insbesondere je eine, schaltbare Kupplung (28) zum drehfesten Verbinden der beiden angeordnet ist.

8. Greifkopf nach einem der vorhergehenden Ansprüche,
**dadurch gekennzeichnet, dass**
- die Kupplung (28) eine Arretier-Vorrichtung zum Arretieren des Sauger-Rohres (22B) in der aktuellen Drehlage ist,
- insbesondere mit einem konzentrisch zur Hochachse (22`) angeordneten, von dem Sauger-Rohr (22B) nach oben abstehenden Arretier-Zapfen (29) mit polygoner, insbesondere regelmäßiger sechseckiger, oberer Stirnfläche und
- einer drehfest am Grundkörper (22A) montierten Arretier-Hülse (30) zum axialen Aufstecken auf den Arretier-Zapfen (29), wodurch dessen Drehung blockiert wird.

9. Greifkopf nach einem der vorhergehenden Ansprüche,
**dadurch gekennzeichnet, dass**
- das Sauger-Rohr (begrenzt) kraftschlüssig drehfest mit der Antriebs-Hülse (26) wirkverbunden ist.

10. Greifkopf nach einem der vorhergehenden Ansprüche,
**dadurch gekennzeichnet, dass**
die Arretier-Hülse (30) eine Universal-Nuss (30) ist, deren Innen-Sechskant-Raum mit einer Vielzahl aneinander anliegender Stifte, insbesondere Sechskant-Stifte (31) gefüllt ist, die einzeln in axialer Richtung (30`) mittels Federkraft vorgespannt sind.

11. **Umsetz-Roboter** (1) zum schnellen Aufnehmen, Abtransportieren und Ablegen von ungeordnet dargebotenen Produkten (P), mit
- einem Roboter-Arm,
- einem Greifkopf (20) am freien Ende des Roboter-Armes,
**dadurch gekennzeichnet, dass**
der Greifkopf (20) nach einem der vorhergehenden Ansprüche ausgebildet ist.

12. Roboter nach Anspruch 11,
**dadurch gekennzeichnet, dass**
der Greifkopf (20), insbesondere dessen Befestigungs-Vorrichtung (20B) sowie die damit in Eingriff bringbaren Teile des Roboter-Armes so ausgebildet sind, dass durch Befestigung des Greifkopfes (20) am Roboter-Arm alle für den Betrieb des Greifkopfes (20) benötigten Verbindungen, insbesondere Antriebs-Verbindungen, mit dem Roboter-Arm hergestellt sind.

13. **Verfahren** zum schnellen Aufnehmen, Abtransportieren und Ablegen von ungeordnet auf einer Aufnahme-Fläche (101) dargebotenen Produkten (P), deren Produkt-Positionen auf der Aufnahme-Fläche (101) bekannt sind, mittels je einem von mehreren Greifern (22), insbesondere Saugern (22), eines Greifkopfes (20) eines Roboters (1), indem
a) eine aufzunehmende Aufnahme-Gruppe (AG) von Produkten (P) automatisch bestimmt wird, deren Relativ-Positionen und insbesondere auch Drehlagen der Produkte (P) in der Aufnahme-Gruppe (AG) zueinander ein Aufnahme-Muster bilden, das bekannt ist oder ermittelt wird,
b) der Greifkopf (20) über die Aufnahme-Gruppe (AG) bewegt wird und auf diese abgesenkt wird,
**dadurch gekennzeichnet, dass**
c) spätestens während des Absenkens zumindest die Relativ-Position der Greifer (22) im Greifkopf (20) zueinander, also das Greifer-Muster, in einen Zustand entsprechend wenigstens einem Teil des Aufnahme-Musters gebracht wird durch gesteuerte Veränderung der Greifer-Abstände zwischen den Greifern (22),
d) am Ende des Absenkens je ein Produkt (P) von je einem Greifer (22), insbesondere Sauger (22), erfasst wird, vorzugsweise gleichzeitig, und der Greifkopf (20) zusammen mit den Produkten (P) hochgehoben, wegbewegt und die Produkte (P) in realen oder virtuellen Nestern abgelegt werden.

14. Verfahren nach Anspruch 13,
**dadurch gekennzeichnet, dass**
e) spätestens während des Absenkens des Greifkopfes **(20)** auf die Nest-Gruppe (NG)
- dieser um eine Hochachse (10) gedreht wird, bis sich in der Aufsicht betrachtet der sich mit dem Nest-Muster übereinstimmende Teil des Greifer-Musters mit dem Nest-Muster deckt, insbesondere die Bewegung-Linie (23) über die Nester der Nest-Gruppe (NG), insbesondere deren Mitten hinweg, verläuft
und/oder
- die einzelnen Greifer (22) um ihre Hochachse (22`) jeweils so gedreht werden, dass sich die Drehlagen der jeweils daran hängenden Produkte (P) relativ zueinander mit der Drehlage der Nester, in denen sie abgelegt werden sollen, übereinstimmt.

15. Verfahren nach Anspruch 13 oder 14,
**dadurch gekennzeichnet, dass**
f) spätestens während des Absenkens des Greifkopfes **(20)** auf die Aufnahme-Gruppe (AG) dieser um eine Hochachse (10) gedreht wird, bis sich in der Aufsicht betrachtet der sich mit dem Aufnahme-Muster übereinstimmende Teil des Greifer-Musters mit dem Aufnahme-Muster deckt.
